Europäisches Patentamt

European Patent Office

Office européen des brevets

(19)

(11) Veröffentlichungsnummer: **0 229 249**
**B1**

(12) **EUROPÄISCHE PATENTSCHRIFT**

(45) Veröffentlichungstag der Patentschrift: **16.05.90**

(21) Anmeldenummer: **86115220.5**

(22) Anmeldetag: **03.11.86**

(51) Int. Cl.⁵: **B 60 K 28/16**

(54) **Verfahren zur Schlupferkennung.**

(30) Priorität: **19.12.85 DE 3545012**

(43) Veröffentlichungstag der Anmeldung:
**22.07.87 Patentblatt 87/30**

(45) Bekanntmachung des Hinweises auf die
Patenterteilung:
**16.05.90 Patentblatt 90/20**

(84) Benannte Vertragsstaaten:
**DE ES FR GB IT**

(56) Entgegenhaltungen:
**DE-A-2 832 739**
**DE-A-3 047 100**

(73) Patentinhaber: **AUDI AG**
**Auto-Union-Strasse 1 Postfach 220**
**D-8070 Ingolstadt (DE)**

(72) Erfinder: **Bois, Wilhelm, Dipl.-Ing.**
**Schulstrasse 2**
**D-8074 Gaimersheim (DE)**
Erfinder: **Sterler, Georg, Dipl.-Ing.**
**Mozartstrasse 20**
**D-8071 Grossmehring (DE)**

(74) Vertreter: **Le Vrang, Klaus**
**AUDI AG Postfach 220 Patentabteilung I/EQP**
**D-8070 Ingolstadt (DE)**

Courier Press, Leamington Spa, England.

**Beschreibung**

Die Erfindung betrifft ein Verfahren zur Regelung des Antriebschlupfs bei einem Kraftfahrzeug. Weiterhin wird ein Schaltungssystem zur Durchführung des Verfahrens vorgeschlagen.

Verfahren und Systeme zur Regelung des Antriebsschlupfes bei Kraftfahrzeugen sind allgemein bekannt. Durch sie wird erreicht, daß bei Abriß der Bodenhaftung eines Fahrzeugrades die Winkelgeschwindigkeit reduziert wird, um ein Durchdrehen des Rades zu verhindern, so daß eine möglichst hohe Haftung zwischen Fahrzeugrad und Straße erhalten bleibt.

Zur Verbesserung der Lenkbarkeit bei gleichzeitig guter Traktion ist ein Antreibsschlupfregelsystem vorgeschlagen worden, bei der Raddrehzahlsensoren ständig die Drehzahl an den angetriebenen und nicht angetriebenen Rädern messen. Aus diesen Signalen wird für jedes Rad die Drehbeschleunigung errechnet, wobei das frei rollende Rad ein Abbild der tatsächliche Fahrzeugbeschleunigung liefert.

Ein Regler bestimmt aus der Drehbeschleunigung jedes angetriebenen Rades im Verhältnis zur Fahrzeugbeschleunigung eine "Uberschußmoment", das zum Durchdrehen eines Fahrzeuggrades führt und beseitigt es automatisch durch Abbremsen diese Fahrzeugrades und/oder durch Rückstellen der Drosselklappe des Motors.

Zur Antriebsschlupfregelung von allradgetriebenen Fahrzeugen eignet sich dieses Regelsystem jedoch nicht, da bei allradgetriebenen Fahrzeugen kein freilaufendes, bzw. nich angetriebenes Rad vorhanden ist, anhand dessen Drehzahl die tatsächliche Fahrzeuggeschwindigkeit bzw. die Fahrzeugbeschleunigung bestimmt werden kann.

Im Falle von allradgetriebene Kraftfahrzeugen sind Beschleunigungsgeber, die beispielsweise auf einem Feder-Masse-System basieren, bekannt, durch die unmittelbar die Fahrzeugbeschleunigung gemessen wird. Der durch den Beschleunigungsgeber gelieferte Beschleunigungswert wird mit einer an einem oder allen Fahrzeugrädern gemessenen Radoeschleunigung verglichen, um ein Regelsignal zu erzeugen, das der Differenz zwischen den genannten Beschleunigungen entspricht. Dieses Regelsignal wird herangezogen, um auf den Motor oder das Bremssystem des Kraftfahrzeuges in dem Sinne einzuwirken, daß die höhere Radbeschleunigung an dei durch den Beschleunigungsgeber gemessene tatsächliche Fahrzeugbeschleunigung angeglichen wird.

Nachteilig dabei ist, daß Beschleunigungsgeber einen relativ komplizierten Aufbau besitzt, und darüber hinaus im Bereich einer Seitgung oder eines Gefälles falsche Längsbeschleunigungswerte liefert, die nur durch einen aufwendigen Algorithmus korrigiert werden können.

Es ist ferner bekannt, im Falle von allradgetriebenen Kraftfahrzeugen die Radbeschleunigung eines oder mehrerer Kraftfahrzeugräder mit einem festen, beispielsweise elektronisch gespeicherten Grenzwert zu vergleichen, um bei Überschreiten des Grenzwertes durch die tatsächliche Radbeschleunigung die Motorleistung zu vermindern oder einen Bremsvorgang einzuleiten, so daß dadurch die über dem Grenzwert liegende tatsächliche Radbeschleunigung auf einen wesentlich niedrigeren Beschleunigungswert zurückgeführt wird, um anschließend die Beschleunigung wieder langsam aufzubauen.

Diese sogenannte Zweipunktregelung ist relativ unkomfortabel, da große Regelschwingungen auftreten, die zu einer verminderten Traktion und einer verminderten Lenkbarkeit und somit zu einer schlechteren Fahrstabilität des Fahrzeuges führen.

Auf sehr glatter Fahrbahn besteht ferner die Gefahr daß ein sogenanntes Weglaufen der errechneten Fahrzeuggeschwindigkeit eintritt. D. h. die errechnete Fahrzeuggeschwindigkeit kann nach diesem Verfahren wesentlich höher als de tatsächliche sein, was zu einer Instabilität führt.

Ausgehend von dem genannten Stand der Technik liegt der Erfindung die Aufgabe zugrunde, ein Verfahren zur Schlupferkennung zu schafften, bei dem der Schlupf auch allein durch die Messung der Winkelgeschwindigkeit bzw. Winkelbeschleunigung eines angetriebenen Rades erkannt werden kann.

Die Aufgabe wird gelöst durch den Hauptanspruch.

Weiterhin wird ein System zur Durchführung des erfindungsgemäßen Verfahrens angegeben.

Vorteilhafte Ausgestaltungen der Erfindung sind in den Unteransprüchen angegeben.

Das erfindungsgemäße Verfahren zeichnet sich dadurch aus, daß eine Änderung in der Lastanforderung erfaßt wird und intern berechnet wird, wie das Rad unter vorgebbaren Betriebsbedingungen auf diese Lastanforderung sich verhalten wird. Weichen die tatsächlichen Reaktionen des Rades, die gemessen werden aus der Winkelgeschwindigkeit des Rades und/oder der ersten Ableitungdes Winkelgeschwindigkeits nach der Zeit von der vorausberechneten Reaktion ab, ist insbesondere die gemessen Geschwindigkeit oder Beschleunigung höher als die vorausberechnete, wird ein Schlupferkennungssignal abgegeben.

Bei einem mit einer Brennkraftmaschine ausgerüsteten Kraftfahrzeug, die durch eine Drosselklappe in ihrer Leistung gesteuert wird, läßt sich die erhöhte Lastanforderung durch die Änderung der Drosselklappenstellung erfassen. Selbstverständlich ist es ebenso möglich, die Stellung des Gaspedals als Maß für die Lastanforderung, die durch den Fahrer definiert wird, zu nehmen.

Bei dem Verfahren läßt sich auf ein gespeichertes Motordrehmoment im Kennfeld zurückgreifen, das die Daten von Motordrehmomenten M in Abhängigkeit der Motordrehzahl N bei jeweils unterschiedlichen DrosselKlappenwinkeln $\alpha_{dk}$ des Verbrennungsmotors enthält. Ggf. kann das Motordrehmoment im Kennfeld noch aufgespannt sein nach zustätzlichen Werten wie Temperatur usw.

Eine einfache Version kann jedoch auch auf derartiges Motordrehmomentenkennfeld verzichten und einfach eine maximal zulässige Beschleunigung in Abhängigkeit der Geschwindigkeit, ggf. jeder Fahrgangstufe getrennt, zuordnen, die nicht überschritten werden darf bei Lastanforderung.

Wird jedoch auf die Kennfelddaten zurückgegriffen, läßt sich bei vorgebbarer Lastanforderung aus dem Motordrehmoment M des Motors sowie der Fahrgangstufe errechnen, bei welcher Geschwindigkeit sich ein Gleichgewichtszustand zwischen M und Fahrwiderstand F, der anhand der Fahrzeugdaten ermittelt werden kann, und Geschwindigkeit einstellt. Somit läßt sich mit Hilfe eines Fahrwiderstandsdiagramms dann die Endgeschwindigkeit $v_e$ des Kraftfahrzeuges aufgrund der Erhöhung des Motordrehmoments M um $\Delta_M$ bestimmen. Unmittelbar nach Erhöhung des Drosselklappenwinkels liegt somit die zu erwartende Endgeschwindigkeit $v_e$ des Fahrzeugs bei bekannter Straßenneigung bzw. bei bekanntem Gefälle vor, so daß sofort die tatsächliche Radgeschwindigkeit $v_r$ unmittelbar nach Erhöhung des Drosselklapperwinkels $\alpha_{dk}$ mit der so bestimmten Endgeschwindigkeit $v_e$ des Kraftfahrzeuges verglichen werden kann. Ist die tatsächliche Radgeschwindigkeit $v_r$ größer als die Endgeschwindigkeit $v_e$, so wird die erstere durch eine geeignete Motorverstellung und/oder durch einen geeigneten Bremsvorgang an einem oder allen Rädern auf die Endgeschwindigkeit $v_e$ herabgesenkt.

Der Schlupf zwischen der tatsächlichen Radgeschwindigkeit und der Endgeschwindigkeit läßt sich somit sehr schnell auf das notwendige Maß zurückführen.

Dies kann zum einen durch einen Bremsvorgang an dem entsprechenden Rad oder denjenigen Rädern erfolgen, deren tatsächliche Radgeschwindigkeit höher als die Endgeschwindigkeit liegt, oder zum anderen dadurch, daß aus dem Vergleichsergebnis zwischen tatsächlicher Radgeschwindigkeit $v_r$ und Endgeschwindigkeit $v_e$ ein Überschußmoment $M_ü$ bestimmt wird (Motordrehmoment), das durch Schließen der Drosselklappe um einen entsprechenden Winkelbetrag abgebaut wird.

Die entsprechende Berechnung läßt sich ebenfalls durchführen, wenn statt der zu erreichenden und tatsächlichen Geschwindigkeit des Rades die erste Ableitung dieser Größen verwendet wird, so daß bereits bei einem Überschreiten der theoretisch möglichen Winkelbeschleunigung des Rades das Schlupferkennungssignal abgegeben wird, um dann die oben genannten Reaktionen zu verursachen.

Um die genannte Endgeschwindigkeit $v_e$ bzw. den zeitlichen Verlauf der Fahrzeuggeschwindigkeit v noch genauer bestimmen zu können, wird vor einer Vergrößerung des Drosselklappenwinkels, also vor einem Beschleunigungsvorgang, anhand des Motordrehmomentenkennfeldes, der Übersetzung und des Fahrwiderstandsdiagramms die Steigung oder das Gefälle des Straße bestimmt, wenn die Geschwindigkeit über ein gewisses Zeitintervall konstant bleibt, wobei die Steigung bzw. das Gefälle zu den Zeitpunkt berücksichtigt werden müssen, zu dem im Fahrwiderstandsdiagramm die den Motordrehmomentänderungen $\Delta_M$ zugeordneten Geschwindigkeiten bzw. Fahrzeuggeschwindigkeiten aufgesucht werden müssen.

Vorzugsweise erfolgt die Bestimmung von Steigungen bzw. Gefällen periodisch in Zeitabschnitten, in denen der Drosselklappenwinkel sowie die Fahrzeuggeschwindigkeit konstant bleibt.

Bei der Ermittlung der Beschleunigung wird eine zusätzliche, mit dem Fahrzeug verbundene Masse dadurch berücksichtigt, daß die berechnete Beschleunigung korrigiert wird um einen Betrag, der sich durch die Trägheit dieser zusätzlichen Masse bestimmt. Diese zusätzliche Masse kann beispielsweise die einer zusätzlichen Beladung des Kraftfahrzeuges oder diejenige eines Anhängers oder dergleichen sein, der mit dem Kraftfahrzeug verbunden ist. Wird das Kraftfahrzeug zum Ziehen eines Anhängers wie beispielsweise eines Wohnwagens benutzt, kann ein entsprechendes Signal beispielsweise an der nunmehr stromführenden elektrischen Verbindung zur Beleuchtung des Anhängers abgegriffen werden.

Ein Schlupfregelsystem zur Durchführung des Verfahrens besteht aus Drehzahlsensoren, die jeweils den angetriebenen Rädern zugeordnet sind, sowie einem Sensor zur Erfassung der Lastanforderung, der beispielsweise die Gaspedalstellung oder bei einer Brennkraftmaschine mit gesteuerter Drosselklappe die Drosselklappenstellung abfragt.

Weiterhin ist eine Recheneinheit erforderlich, die beispielsweise aus einem Festwertspeicher Information über Betriebsparameter wie Motordrehmomentenkennfeld, Getriebeübersetzung, Fahrwiderstandsdiagramm erhält, um aus der Lastanforderung die zu erwartende Winkelbeschleunigung des Rades zu berechnen. Weitere Randparameter mie Veränderungen im Gewicht des Fahrzeuges oder die Tatsache, daß das Fahrzeug einen Hänger zieht, können mit in die Berechnung einfließen.

Diese elektrische Einheit führt die Berechnung durch und vergleicht das Ergebnis der Berechnung mit dem Signal der Drehzahlsensoren.

In Reaktion auf eine Schlupferkennungssignal kann entweder die dem Rad zugeordnete Bremse betätigt werden, um die Umdrehung des Rades zu reduzieren, es ist jedoch auch möglich, den Drosselklappenwinkel zurückzunehmen, um das auf das Rad einwirkende Drehmoment zu reduzieren. Die erste Lösung bietet sich in Bereichen an, in denen langsam gefahren wird, beispielsweise unterhalb einer Geschwindigkeit von etwa 10 m/s während darüber die Schlupfregelung durch die Beeinflussung des Drosselklappenwinkels durchgeführt wird.

Die Zeichnung stellt ein Ausführungsbeispiel der Erfindung dar. Es zeigen:

Fig. 1 einen Drosselklappen- bzw. Motordrehmomentensprung in einem Drosselklappenwinkel- bzw. Motordrehmoment-Zeitdiagramm,

Fig. 2 ein Geschwindigkeits-Zeitdiagram zur Erläuterung der sich einstellenden tatsächlichen Radgeschwindigkeit bzw. Fahrzeuggeschwindigkeit nach Erhöhung des Drosselklappenwinkels,

Fig. 3 ein Motordrehmomentenkennfeld,

Fig. 4 ein Fahrwiderstandsdiagramm,

Fig. 5 ein Blockschaltbild eines Antriebsschlupfregelsystems nach der Erfindung, und

Fig. 6 den Innenaufbau eines Reglers im Antriebsschlupfregelsystem nach Fig. 5.

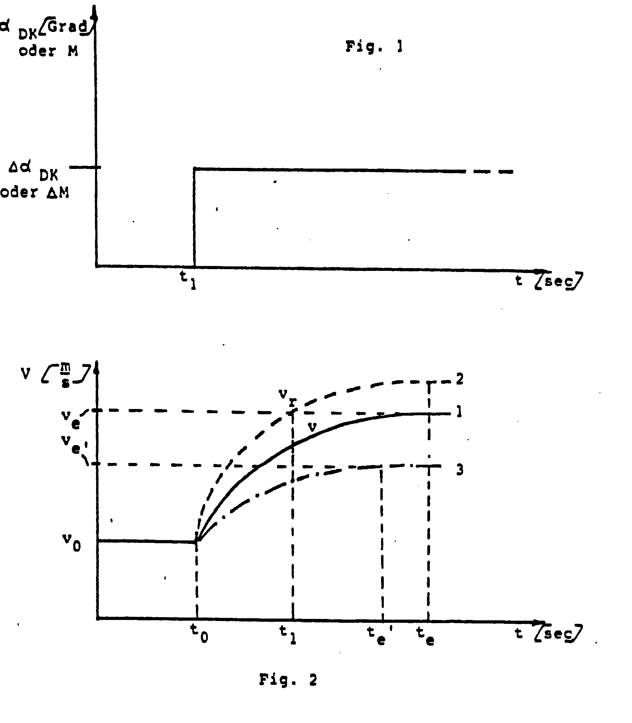

Im folgenden wird anhand der Fig. 1 bis 4 das Antriebsschlupfregelverfahren nach der Erfindung näher beschrieben.

Die Fig. 1 zeigt ein Drosselklappenwinkel- und Motordrehmoment-Zeitdiagramm, in dem entlang der Abszisse die Zeit t in Sekunden und entlang der Ordinate der Drosselklappenwinkel $\alpha_{DK}$ in Grad oder, ebenfalls entlang der Ordinate, das Motordrehmoment M aufgetragen sind. Zum Zeitpunkt $t_0$ soll beispielsweise bei einen fahrenden Kraftfahrzeug der Drosselklappenwinkel $\alpha_{DK}$ um einen bestimmten Winkelbetrag $\Delta\alpha_{DK}$ erhöht werden und im folgenden konstant bleiben. Diese Erhöhung des Drosselklappenwinkels $\alpha_{DK}$ hat ebenfalls eine Erhöhung des Motordrehmoments M um $\Delta M$ zur Folge, wie anhand der Fig. 1 zu erkennen ist.

Die Reaktion des Kraftfahrzeuges auf diese Erhöhung des Drosselklappenwinkels $\alpha_{DK}$ ist in Fig. 2 dargestellt. Dabei sei angenommen, daß bis zum Zeitpunkt $t_0$ sich das Kraftfahrzeug mit der Geschwindigkeit $v_0$ bewegt hat. Ab dem Zeitpunkt $t_0$, also nach Erhöhung des Drosselklappenwinkels $\alpha_{DK}$ um $\Delta\alpha_{DK}$, wird das Kraftfahrzeug aufgrund des zusätzlichen Motordrehmomentes $\Delta M$ beschleunigt, so daß sich seine Geschwindigkeit v entsprechend der Kurve 1 in Fig. 2 erhöht. Auf der Abszisse in Fig. 2 ist die Zeit t in Sekunden aufgetragen, während entlang der Ordinate die Geschwindigkeit v in m/s aufgetragen ist. Nach einer bestimmten Zeit $t_e$ stellt sich die aufgrund des zusätzlichen Motordrehmoments $\Delta M$ sowie der Getriebeübersetzung erreichbare Fahrzeugendgeschwindigkeit $v_e$ ein, und zwar bei einem bestimmten Straßenzustand. Im folgenden sei zunächst angenommen, daß die Straße, entlang der das Kraftfahrzeug fänrt, weder eine Steigung noch ein Gefälle aufweisen soll. Die Kurve 2 in Fig. 2 bezieht sich auf die tatsächliche Radgeschwindigkeit $v_r$, die mit einem Drehzahlsensor an einem oder an allen Rädern gemessen werden kann. In Fig. 2 liegt diese Kurve 2 oberhalb der Kurve 1, was bedeutet, daß die tatsächliche Geschwindigkeit bzw. tatsächliche Geschwindigkeitsänderung pro Zeiteinheit (Beschleunigunge) eines Fahrzeugrades größer als die mögliche Geschwindigkeit bzw. Geschwindigkeitsänderung pro Zeiteinheit (Beschleunigung des Kraftfahrzeuges aufgrund des Motordrehmomentensprungs $\Delta M$ ist. Es liegt somit ein Schlupf zwischen den genannten Geschwindigkeiten vor, der beispielsweise durch eine zu glatte Fahrbahn verursacht wird, wenn infolge der Glätte die Räder durchdrehen.

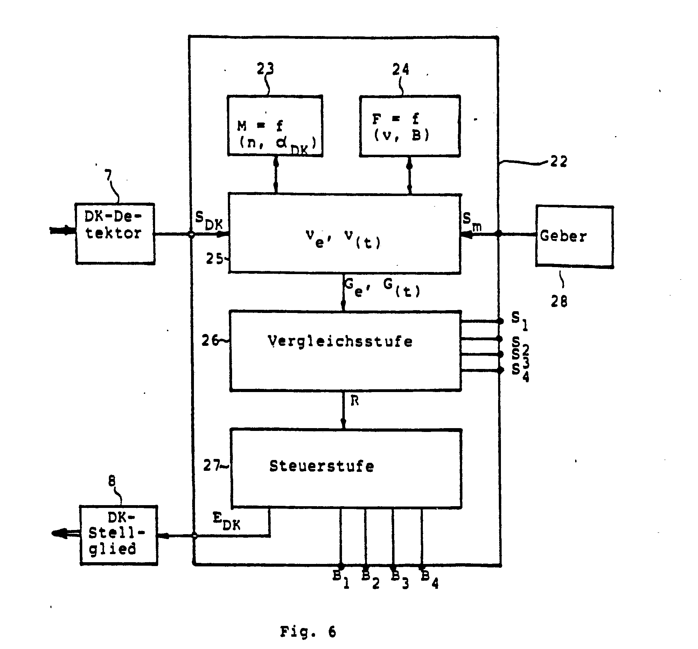

Durch einen Vergleich der tatsächlichen Radgeschwindigkeit $v_r$ mit der darunterliegenden Fahrzeuggeschwindigkeit v zu beliebigen Zeitpunkten zwischen $t_0$ und $t_e$ wird ein Regelsignal R erzeugt (vgl. Fig. 6), mit dessen Hilfe die tatsächliche Radgeschwindigkeit $v_r$ wieder an die Fahrzeuggeschwindigkeit v angeglichen wird, um den Schlupf zu beseitigen.

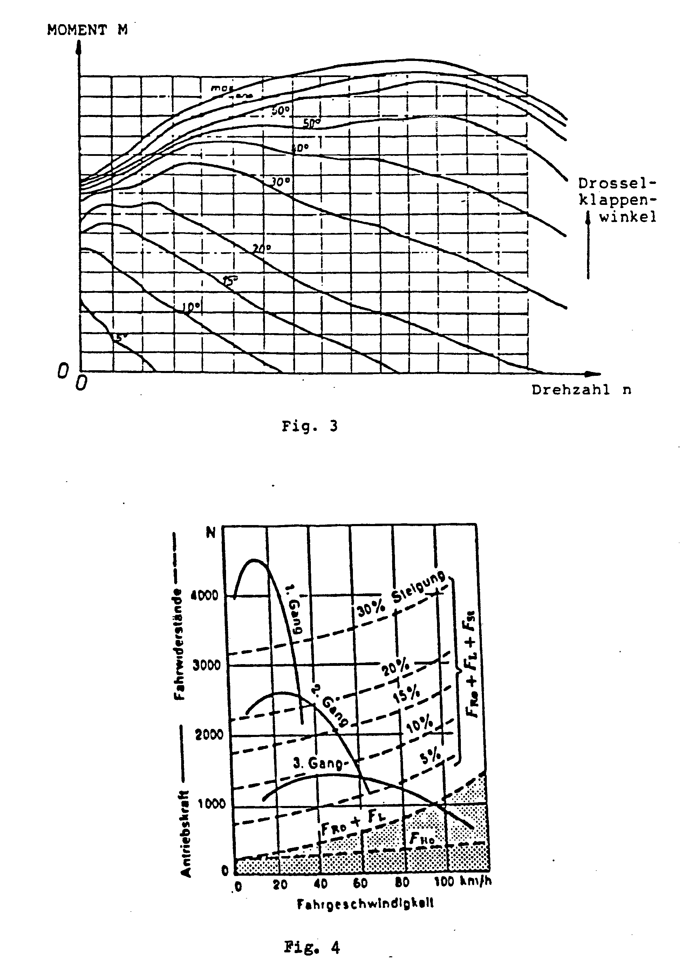

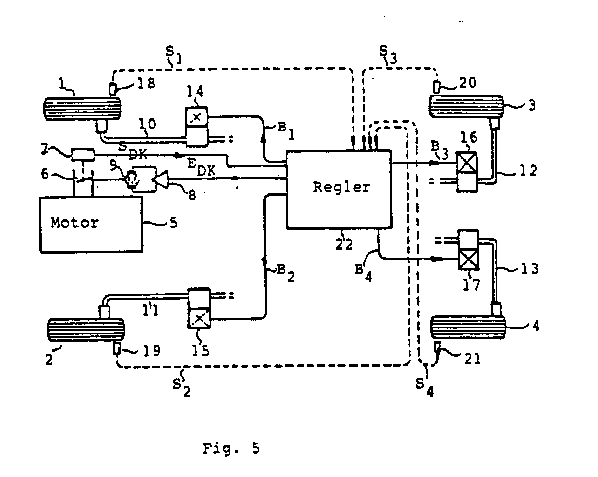

Nachfolgend wird die Ermittlung der Fahrzeuggeschwindigkeit gemäß der Kurve 1 in Fig. 2 anhand der Fig. 3 und 4 näher erläutert. Wird, wie in Fig. 1 dargestellt ist, zum Zeitpunkt $t_0$ der Drosselklappenwinkel $\alpha_{DK}$ um einen Winkelbetrag $\Delta\alpha_{DK}$ erhöht, so kann aus dem Motordrehmomentenkennfeld nach Fig. 3 unmittelbar das zugehörige zusätzliche Motordrehmoment $\Delta M$ ausgelesen werden. Das Motordrehmomentenkennfeld enthält Daten von Motordrehmomenten in Abhängigkeit der Motordrehzahl n des Kraftfahrzeugs bei vorgegebenen Drosselklappenwinkeln $\alpha_{DK}$ und ist beispeilsweise in einer ersten elektronischen Speichereinrichtung abgelegt bzw. gespeichert. Auf die Speicherung von Kennfeldern in einem elektronischen Speicher wird im nachfolgenden nicht näher eingegangen. Sie ist allgemein bekannt.

Ist auf diese Wiese das zusätzliche Motordrehmoment $\Delta M$ erhalten worden, so wird anschließend mit Hilfe des Fahrwiderstandsdiagramms die zu erwartende Endgeschwindigkeit $v_e$ des Kraftfahrzeugs aufgrund des Motordrehmomentensprungs $\Delta M$ bzw. der Verlauf der Kraftfahrzeuggeschwindigkeit v zwischen dem Zeitpunkt $t_0$ und dem Zeitpunkt $t_e$ bestimmt.

In Fig. 4 ist das Fahrwiderstandsdiagramm des in Rede stehenden Kraftfahrzeugs dargestellt. Es enthält Daten über den Fahrwiderstand F des Kraftfahrzeugs in Abhängigkeit von der Fahrzeuggeschwindigkeit bei jeweils verschiedenen Straßenneigungen (Steigung bzw. Gefälle). Diese Fahrwiderstandsdiagramm gemäß Fig. 4 ist in einer zweiten elektronischen Einrichtung abgelegt bzw. in digitaler Form gespeichert, genau so wie das Motordrehmomentenkennfeld gemäß Fig. 3. Aus dem zusätzlichen Motordrehmoment $\Delta M$ läßt sich ein gegenüber dem ursprünglichen Fahrwiderstand $F_1$ erhöhter Fahrwiderstand $F_2$ entsprechend nachfolgender Gleichung ermitteln:

$$F_2 = (\Delta M \cdot F_1) \qquad (1)$$

Für den Fall, daß die Steigung der Straße 0% beträgt, läßt sich aus dem Fahrwiderstandsdiagramm nach Fig. 4 unmittelbar die mögliche Endgeschwindigkeit $v_e$ gegenüber der ursprünglichen Fahrzeuggeschwindigkeit $v_0$ bei Erhöhung des Fahrwiderstands $F_1$ auf $F_2$ ablesen. Die so ermittelte Endgeschwindigkeit $v_e$ steht also unmittelbar nach Erhöhung des Drosselklappenwinkels $\alpha_{DK}$ zur Verfügung.

Durch schrittweises Unterteilen des zusätzlichen Motordrehmoments $\Delta M$ in eine Anzahl gleicher Teilmotordrehmomente läßt sich andererseits auch der Fahrwiderstand F zwischen dem Fahrwiderstands $F_1$ und dem Fahrwider

stand $F_2$ gleichmäßig unterteilen, so daß weiterhin aus dem Fahrwiderstandsdiagramm auch unmittelbar der Verlauf der Fahrzeuggeschwindigkeit zwischen den Geschwindigkeiten $v_0$ und $v_e$ ausgelesen werden kann. Die erhaltene Geschwindigkeitskurve ist die bereits anhand der Fig. 2 diskutierte Kurve 1.

Durch Festellung der Steigungen der Kurven 1 und 2 in Fig. 2 läßt sich somit unmittelbar nach dem Zeitpunkt $t_0$ bestimmen, ob ein Schlupf zwischen der tatsächlichen Radgeschwindigkeit und der Fahrzeuggeschwindigkeit vorliegt, der durch eine geeignete Abbremsung des oder der Fahrzeugräder oder durch einen entsprechenden Motoreingriff vermindert bzw. beseitigt werden kann. Dieser Vergleich zwischen den beiden Kurven 1 und 2 kann im gesamten Bereich zwischen den Zeiten $t_0$ und $t_e$ vorgenommen werden. Neben dem Steigungsvergleich lassen sich auch die Geschwindigkeiten $v_r$ und v direkt untereinander vergleichen, und zwar beispielsweise zu einem Zeitpunkt $t_e$, zu dem die Fahrzeuggeschwindigkeit v die Endgeschwindigkeit $v_e$ angenommen hat. Dann wird ein entsprechendes Regelsignal zur Verminderung der Geschwindigkeit $v_r$ erzeugt. Dieses kann allerdings auch schon zu einem Zeitpunkt $t_1$ erzeugt werden, wenn festgestellt wird, daß die tatsächliche Radgeschwindigkeit $v_r$ die Endgeschwindigkeit $v_e$ überschreitet. Selbstverständlich läßt sich ein derartiges Signal auch zwischen den Zeiten $t_0$ und $t_1$ erzeugen.

Wie in Fig. 4 zu erkennen ist, wurde aufgrund des zusätzlichen Motordrehmoments $\Delta M$ die Endgeschwindigkeit $v_e$ unter der Bedingung bestimmt, daß die Steigung der Straße 0% beträgt. Die genannte Straßenseitung kann vor Erhöhung des Drosselklappenwinkels $\alpha_{DK}$ festgestellt werden, und zwar ebenfalls anhand des Motordrehmomentenkennfelds und des Fahrwiderstandsdiagramms. Hierzu wird vor dem Zeitpunkt $t_0$ ein Wertepaar M, n bei der entsprechenden Drosselklappenstellung ausgelesen, mit dem nach Umrechnung im Fahrwiderstandsdiagramm nach Fig. 4 die entsprechende Kurve konstanter Steigung bzw. konstanten Gefälles aufgesucht wird. Die Umrechnung erfolgt dabei mit der bereits erwähnten Gleichung (1) sowie unter Berücksichtigung der eingestellten Gangstufe, die bekannt sein maß, um aus der Motordrehzahl n eine entsprechende Fahrzeuggeschwindigkeit zu ermitteln. Wird anschließend der Drosselklappenwinkel erhöht, so werden aufgrund des zusätzlichen Motordrehmoments $\Delta M$ nur Fahrzeuggeschwindigkeiten bezüglich dieser Kurve konstanter Steigung ausgelesen.

Ist vor der Vergrößerung des Drosselklappenwinkels anhand des Ausgangsmotordrehmoments und der Ausgangsfahrzeuggeschwindigkeit $v_0$ z.B. eine größere Straßensteigung festgestellt worden, so werden nachfolgend die entsprechenden Geschwindigkeitswerte bei gleicher zusätzlicher Drehmomenterhöhung $\Delta M$ anhand der diese konstante Steigung beschreibenden Kurve im Fahrwiderstandsdiagramm ermittelt. Diese Kurve ist in Fig. 4 beispelsweise die 10%-Kurve. Wie leicht erkannt werden kann, ergibt sich bei gleichem zusätzlichem Motordrehmoment $\Delta M$, durch das der Fahrwiderstand $F_1'$ auf $F_2'$ erhöht wird, eine gegenüber der Endgeschwindigkeit $v_e$ verringerte Endgeschwindigkeit $v_e'$. Entsprechendes gilt für alle dazwischenliegenden Geschwindigkeiten, so daß letzlich für diesen Fall ein Geschwindigkeitsverlauf erhalten wird, wie er in Fig. 2 anhand der Kurve 3 dargestellt ist. Durch Vergleich des Geschwindigkeitverlaufs des Kraftfahrzeugs entsprechend Kurve 3 nach Fig. 2 mit der tatsächlichen Radgeschwindigkeit $v_r$ läßt sich wiederum ermitteln, ob letztere oberhalb der Kurve 3 liegt oder nicht. Ist dies der Fall, so kann aufgrund der Abweichungen zwischen den Kurven 2 und 3 im zeitlichen Bereich zwischen $t_0$ und $t_e'$ ein Regelsignal zur Verminderung dieser Abweichung erzeugt werden.

Die Bestimmung von Straßensteigung oder Straßengefälle kann periodisch in Zeitabschnitten erfolgen, in denen der Drosselklappenwinkel konstant ist.

Bei der Ermittlung der Endgeschwindigkeit bzw. des zeitlichen Verlaufs der Fahrzeuggeschwindigkeit wird eine zusätzliche mit dem Fahrzeug verbundene Masse m dadurch berücksichtigt, daß von der Endgeschwindigkeit $v_e$ bzw. $v_e'$ oder vom zeitlichen Verlauf der Fahrzeuggeschwindigkeit eine Geschwindigkeitsbetrag $v_m$ substrahiert wird, der sich durch die Trägheit dieser zusätzlichen Masse m bestimmt. Dieser Geschwindigkeitsbetrag ergibt sich zu

$$v_m = \frac{K}{m} \, dt \qquad (2)$$

Hierbei ist K diejenige Kraft, die vorhanden sein muß, damit die träge Masse m auf die entsprechende Geschwindigkeit beschleunigt werden kann. Die entsprechenden Kräfte K können zuvor empirisch ermittelt worden sein.

Wie bereits erwähnt, kann ein Vergleich zwischen tatsächlicher Radgeschwindigkeit und Fahrzeug- oder Fahrzeugendgeschwindigkeit bzw. zwischen daraus abgeleiteten Werten (Beschleunigungswerten) bezüglich einzelner oder aller Fahrzeugräder durchgeführt werden. Aus jeweils einen Vergleichsergebnis $v_r - v_e$, $v_r - v$ oder $\Delta v_r/\Delta t - \Delta v/\Delta t$ bezüglich eines Fahrzeugrads 1 bis 4 läßt sich dann ein Stellsignal $B_1$ bis $B_4$ zum Abbremsen dieses Fahrzeugrads erzeugen.

Aus den genannten Vergleichsergebnissen läßt sich aber auch ein Überschußmoment $M_ü$ bestimmen, das durch Schließen der Drosselklappe um einen entsprechenden Winkelbetrag $\Delta \alpha'_{DK}$ abgebaut wird.

Vorzugsweise werden die Stellsignale während des Anfahrens und im Langsamfahrbereich erzeugt, der etwa bis 10 m/s reicht. Im Anfahrbereich kann somit überschüssige Motorkraft an jedem Antriebsrad individuell durch Abbremsen des jeweiligen Rades vernichtet werden. Ein gezieltes Schließen der Drosselklappe hätte in diesem Fahrbereich ein "Abwürgen" des Motors zur Folge.

Bei Langsamfahrt, d.h. in einem Fahrbereich zwischen dem Anfahrbereich und ca. 10 m/s, wird die an einem Rad festgestellte überschüssige Antriebskraft so wie beim Fahrbereich "Anfahren" durch Abbremsen dieses Rades beseitigt. Falls ein weiteres Antriebsrad durchzudrehen beginnt, kann eine Zurückstellung der Drosselklappe vorgenommen werden. Durch diese individuelle Regelung kann beim Anfahren und bei Langsamfahrt immer der jeweils höhere Kraftschluß an den Antriebsrädern ausgenutzt werden ("select high"). Bei Schnellfahrt, also bei einer Geschwindigkeit höher als ca. 10 m/s, könnte dieses "select high" eventuell zu unerwünschten Gierreaktionen des Fahrzeugs führen. Deshalb wird hier schon beim Durchdrehen nur eines Rads sofort ohne Abbremsen der Drosselklappenwinkel so weit zurückgestellt, daß der Schlupf das vorbestimmte Maß nicht überschreitet ("select low"). Hierdurch wird eine unerwünschte und für den Fahrer überraschende Lenkreaktion vermieden.

Es sei darauf hingewiesen, daß der Drosselklappenwinkel $\alpha_{DK}$ nicht nur um kleine Winkelbeträge, sondern auch momentan um den gesamten Drosselklappenwinkelbereich verstellt werden kann. Das bedeutet, daß bei einer vorhandenen Fahrzeuggeschwindigkeit zur Beschleunigung des Fahrzeugs das Gaspedal vollständig durchgetreten werden kann.

In Fig. 5 ist ein Blockschaltbild eines Antriebsschlupfregelsystems in Verbindung mit einem Kraftfahrzeug dargestellt. Sämtliche Fahrzeugräder 1 bis 4 werden dabei mit Hilfe eines Verbrennungsmotors 5 und über ein nicht dargestelltes Getriebe angetrieben. Mit dem Motor 5 ist eine Drosselklappe 6 zur Veränderung der Motorleistung bzw. des Motordrehmoments verbunden. Der Drosselklappenwinkel $\alpha_{DK}$ der Drosselklappe 6 wird mit Hilfe eines Detektors 7 ermittelt, der ein entsprechendes Drosselklappenwinkelsignal $S_{DK}$ abgibt. Die Verstellung der Drosselklappe 6 erfolgt andererseits über ein Stellglied 8, das einen Verstellmotor 9 enthält, der über ein Getriebe mit der Drosselklappe 6 verbunden ist. Das Stellglied 8 empfängt dabei ein Drosselklappeneinstellsignal $E_{DK}$.

Mit jeweils eine Fahrzeugrad 1 bis 4 ist eine Bremseinrichtung 10 bis 13 verbunden. Der durch die Bremseinrichtungen 10 bis 13 erzeugte Bremsdruck wird gezielt mit Hilfe aktiver elektromagnetischer Bremsdrucksteller 14 bis 17 erzeugt. Die Bremsdrucksteller 14 bis 17 empfangen jeweils ein Bremsdrucksignal $B_1$ bis $B_4$.

Die tatsächliche Radgeschwindigkeit $v_r$ der jeweiligen Fahrzeugräder 1 bis 4 wird mit Hilfe von diesen Fahrzeugrädern 1 bis 4 zugeordneten Drehzahlsensoren 18 bis 21 detektiert. Die Drehzahlsensoren 18 bis 21 liefern dabei Sensorsignale $S_1$ bis $S_4$.

Mit dem Detektor 7, dem Stellglied 8, den Bremsdruckstellern 14 bis 17 und den Drehzahlsensoren 18 bis 21 ist ein Regler 22 verbunden. Dieser Regler 22 empfängt das Drosselklappenwinkelsignal $S_{DK}$ und die Sensorsignale $S_1$ bis $S_4$, und liefert das Drosselklappeneinstellsignal $E_{DK}$ an das Stellglied 8 sowie die Bremsdrucksignale $B_1$ bis $B_4$ an die Bremsdrucksteller 14 bis 17.

Die Fig. 6 zeigt den inneren Aufbau des Reglers 22. Er besitzt eine erste elektronische Speichereinrichtung 23 zur digitalen Speicherung des Motordrehmomentenkennfelds und eine zweite elektronische Speichereinrichtung 24 zur digitalen Speicherung des Fahrwiderstandsdiagramms. Bei de Speichereinrichtung 23 und 24 sind mit einer elektronischen Einrichtung 25 verbunden, die zusätzlich das Drosselklappenwinkelsignal $S_{DK}$ von Detektor 7 empfängt. Diese elektronische Einrichtung 25 ermittelt bei Erhöhung des Drosselklappenwinkels $\alpha_{DK}$ um einen Betrag $\Delta\alpha_{DK}$ bzw. einer entsprechenden Erhöhung des Drosselklappenwinkelsignals $S_{DK}$ anhand des Motordrehmomentenkennfelds und des Fahrwiderstandsdiagramms der Kraftfahrzeugs die zu erwartende Endgeschwindigkeit $v_e$ bzw. den Verlauf der Fahrzeuggeschwindigkeit $v$ nach der Vergrößerung des Drosselklappenwinkels $\alpha_{DK}$ bzw. nach der Vergrößerung des Drosselklappenwinkelsignals $S_{DK}$. Hierzu wird zunächst aufgrund der Veränderung des Drosselklappenwinkels $\alpha_{DK}$ das zugeordnete zusätzliche Motordrehmoment $\Delta M$ aus dem im ersten Speicher 23 gespeicherten Motordrehmomentenkennfeld ausgelesen. Nach Umrechnung des zusätzlichen Motordrehmoments $\Delta M$ in eine entsprechende Fahrwiderstandsdifferenz $\Delta F$ wird bei bekannter Straßensteigung die zugehörige Endgeschwindigkeit $v_e$ bzw. der zugehörige Geschwindigkeitsverlauf des Fahrzeugs nach Verstellung des Drosselklappenwinkels $\alpha_{DK}$ aus dem in Speicher 24 gespeicherten Fahrwiderstandsdiagramms ausgelesen. Um von der Motordrehzahl $n$ zur Fahrzeuggeschwindigkeit $v$ zu kommen, muß dabei die Gangstufe des Fahrzeuggetriebes berücksichtigt werden.

In ähnlicher Weise kann vor einer Erhöhung des Drosselklappenwinkels aus dem Motordrehmomentenkennfeld im Speicher 23 und dem Fahrwiderstandsdiagramm im Speicher 24 durch die elektronische Einrichtung 25 die Steigung bzw. das Gefälle der Straße ermittelt werden. Diese Ermittlung erfolgt vorzugsweise dann, wenn der Drosselklappenwinkel $\alpha_{DK}$ über längere Zeit konstant ist, was durch eine zusätzliche und nicht dargestellte Stufe innerhalb der elektronischen Einrichtung 25 festestellt werden kann.

Mit der elektronischen Einrichtung 25 ist eine Vergleichstufe 26 verbunden, die von der elektronischen Einrichtung 25 gelieferte Geschwindigkeitssignale $G_e$ und $G_{(t)}$ erhält. Das Geschwindigkeitssignal $G_e$ entspricht dabei der Fahrzeugendgeschwindigkeit $v_e$, während das Geschwindigkeitssignal $G_{(t)}$ dem Geschwindigkeitsverlauf $v_{(t)}$ des Fahrzeugs nach Erhötung des Drosselklappenwinkels $\alpha_{DK}$ und bis zum Erreichen der Endgeschwindigkeit $v_e$ entspricht. Die Vergleichstufe 26 empfängt weiterhin die Sensorsignale $S_1$ bis $S_4$ und vergleicht diese mit den

Geschwindigkeitssignalen $G_e$ und $G_{(t)}$. Liegen die Sensorsignale $S_1$ bis $S_4$ nach dem Zeitpunkt $t_0$ entsprechend den Fig. 1 und 2 beispielsweise über dem Geschwindigkeitssignal $G_{(t)}$, so kann bereits jetzt ein entsprechendes Regelsignal R von der Vergleichsstufe 26 an eine Steuerstufe 27 geliefert werden, die mit der Vergleichsstufe 26 verbunden ist. Werden dagegen die Sensorsignale $S_1$ bis $S_4$ mit dem Geschwindigkeitssignal $G_e$ verglichen, so wird frühestens ein Regelsignal R zur Steuerstufe 27 geliefert, wenn die tatsächliche Radgeschwindigkeit $v_r$ bzw. ein entsprechendes Sensorsignal die Endgeschwindigkeit $v_e$ bzw. das Geschwindigkeitssignal $G_e$ überschritten hat.

In Abhängigkeit des Regelsignals, also der Differenz zwischen einem oder mehreren der Steuersignale $S_1$ bis $S_4$ und den Geschwindigkeitssignalen $G_e$ bzw. $G_{(t)}$, gibt die Steurerstufe 27 die Stellsignale $B_1$ bis $B_4$ an die Bremsdrucksteller 14 bis 17 und/oder das Drosselklappeneinstellssignal $E_{DK}$ an das Stellglied 8 aus. Je nachdem, ob sich das Fahrzeug im Anfahr-, Langsamfahr- oder Schnellfahrbereich befindet, erfolgt die Ausgabe der einen und/oder anderen Signale, wie bereits zuvor beschrieben. Hierzu wird die Fahrzeuggeschwindigkeit ebenfalls zur Steuerstufe 27 übertragen.

Wie bereits erwähnt, ermittelt bzw. berücksichtigt die elektronische Einrichtung 25 eine Straßensteigung bzw. ein Straßengefälle, wobei diese Ermittlung vor einer Erhöhung des Drosselklappenwinkels erfolgt. Zusätzlich kann die elektronische Einrichtung 25 mit einem Geber 28 verbunden sein, der ein Signal $S_m$ zur elektronischen Einrichtung 25 liefert, das der Masse einer zusätzlichen Fahrzeugbeladung oder einer vom Fahrzeug gezogenen Masse entspricht. Die elektronische Einrichtung 25 ist dann in der Lage, von einer ermittelten Endgeschwindigkeit $v_e$ bzw. einem ermittelten Geschwindigkeitsverlauf des Fahrzeugs einen Geschwindigkeitsbetrag zu subtrahieren, der dieser zusätzlichen Masse entspricht.

Der Regler 22 kann beispeilsweise durch einzelne elektronische Bauelemente oder Gruppen von Bauelmenten aufgebaut sein. Er kann aber auch ein Mikroprozessor sein.

## Patentansprüche

1. Verfahren zur Schlupferkennung durch Überwachung der Winkelgeschwindigkeit mindestens eines der angetriebenen Räder eines Kraftfahrzeuges, dadurch gekennzeichnet, daß
a) eine Änderung in der Lastanforderung erfaßt wird,
b) aus der Änderung der Lastanforderung die zu erwartende Auswirkung auf die Winkelgeschwindigkeit des angetriebenen Rades unter Berücksichtigung mehrerer Randbedingungen berechnet wird,
c) das Ergebnis der berechneten Auswirkung mit der tatsächlichen Auswirkung verglichen wird, und
d) bei unzulässiger Abweichung des tatsächlichen vom berechneten Ergebnis eine Schlupferkennungssignal abgegeben wird.

2. Verfahren nach Anspruch 1, dadurch gekennzeichnet, daß die Änderung der Lastanforderung bei einem Kraftfahrzeug mit einem von einer Drosselklappe gesteuerten Verbrennungsmotor durch die Änderung der Drosselklappenstellung erfaßt wird.

3. Verfahren nach Anspruch 1 oder 2, dadurch gekennzeichnet, daß aus der Änderung der Lastanforderung das sich zusätzlich einstellende Motordrehmoment errechnet wird.

4. Verfahren nach Anspruch 1, dadurch gekennzeichnet, daß bei der Berechnung eine maximal zulässige Beschleunigung als fester Parameter berücksichtigt wird.

5. Verfahren nach einem der Ansprüche 1 bis 3, dadurch gekennzeichnet, daß bei der Berechnung der zu erwartenden Auswirkung auf die Winkelgeschwindigkeit das Motordrehmoment und die Getriebeübersetzung berücksichtigt werden.

6. Verfahren nach Anspruch 5, dadurch gekennzeichnet, daß der Fahrwiderstand berücksichtigt wird.

7. Verfahren nach einem der Ansprüche 1 bis 6, dadurch gekennzeichnet, daß die Steigung der Straße durch einen Sensor erfaßt und berücksichtigt wird.

8. Verfahren nach einem der Ansprüche 1 bis 6, dadurch gekennzeichnet, daß durch eine Fahrwiderstandsdiagramm und die Erfassung weiterer Betriebsparameter des Fahrzeuges die Steigung der Straße ermittelt wird.

9. Verfahren nach Anspruch 8, dadurch gekennzeichnet, daß zu den weiteren Betriebsparametern das Motordrehmoment und die Getriebeübersetzung bei konstanter Geschwindigkeit gehören.

10. Verfahren nach einem der Ansprüche 1 bis 9, dadurch gekennzeichnet, daß die zu erwartende Endgeschwindigkeit errechnet wird und ein Überschreiten der Endgeschwindigkeit als Schlupf interpretiert wird.

11. Verfahren nach einem der Ansprüche 1 bis 9, dadurch gekennzeichnet, daß die Winkelbeschleunigung der Räder errechnet und gemessen wird und ein Überschreiten des berechneten Wertes als Schlupf interpretiert wird.

12. Verfahren nach einem der vorhergehenden Ansprüche, dadurch gekennzeichnet, daß bei Abgabe des Schlupferkennungssignales aus den berechneten und gemessen Auswirkungen des zusätzlichen Motordrehmomentes auf die Fahrzeugräder ein Überschußmoment bestimmt wird, das durch Schließen der Drosselklappe um einem entsprechenden Winkelbetrag abgebaut wird.

13. Verfahren nach einem der Ansprüche 1 bis 11, dadurch gekennzeichnet, daß aus dem Vergleichsergebnis zwischen den gemessenen und den berechneten Auswirkungen auf die Winkelgeschwindigkeit bie Abgabe eines Schlupfsignales ein Abbremsen des Fahrzeugrades bewirkt wird.

14. Verfahren nach Anspruch 13, dadurch gekennzeichnet, daß das Stellsignal zum Abbremsen des Fahrzeuges während des Anfahrens und dem Langsamfahrbereich erzeugt wird.

15. Verfahren nach Anspruch 14, dadurch gekennzeichnet, daß der Langsamfahrbereicht bei etwa 10 m/sec endet.

16. Verfahren nach Anspruch 12 und 14, dadurch gekennzeichnet, daß oberhalb des Langsamfahrbereiches bei einem Schlupferkennungssignal des Drosselklappe zurückgestellt wird und unterhalb des Langsamfahrbereiches bei einem Schlupfsignal das Fahrzeugrad abgebremst wird.

17. Schlupfregelsystem zur Durchführung des Verfahrens nach einem der Ansprüche 1 bis 16, gekennzeichnet durch

a) einen mindestens einem der angetriebenen Räder (1—4) zugeordneten Drehzahlsensor (18—21),

b) einem Sensor (7) zur Erfassung der Lastanforderung,

c) einer elektronischen Einrichtung (25) zur rechnerischen Bestimmung der Auswirkung der Lastanforderung auf die Winkelgeschwindigkeit des Fahrzeugrades (4) unter Einbeziehung einer oder mehrerer der folgenden Größen: Motordrehmomentenkennfeld, Getriebeübersetzung, Fahrwiderstandsdiagramm, Gewicht des Fahrzeugs,

d) eine Vergleichsstufe (26) zum Vergleichen der Sensorsignale (S1—S4) mit den Geschwindigkeitssignalen (GE, G) und zur Lieferung eines Regelsignales (R) in Abhängigkeit des Vergleichs.

18. Schlupfregelsystem nach Anspruch 17, gekennzeichnet durch einen Bremsdrucksteller (14—17) für jeweils ein Fahrzeugrad (1—4) zur Einstellung des Radbremsdrucks in Abhängigkeit eines Stellsignals (B1—B4).

19. Schlupfregelsystem nach Anspruch 17, gekennzeichnet durch ein Stellglied (8) zur Verstellung der Drosselklappe (6) in Abhängigkeit des Drosselklappeneinstellsignals (E$_{dk}$).

20. Schlupfregelsystem nach Anspruch 18 und 19, gekennzeichnet durch eine Steuerstufe (27), die in Abhängigkeit der Fahrzeuggeschwindigkeit die Stellsignale (B1—B4) und/oder ein Drosselklappeneinstellsignal (E$_{dk}$) ausgibt.

**Revendications**

1. Procédé de détection de patinage par surveillance de la vitesse angulaire de l'une au moins des roues motrices d'un vehicule automobile, caractérisé en ce que

a) un changement de la demande de charge est détecté,

b) à partir du changement de la demande de charge, l'effet a présumer sur la vitesse angulaire de la roue motrice est calculé en tenant compte de plusieurs conditions marginales,

c) le résultat de l'effet calculé est comparé avec l'effet reel, et

d) un signal de détection de patinage est émis lorsque le résultat reel s'écarte de façon inadmissible du résultat calculé.

2. Procédé selon la revendication 1, caractérisé en ce que dans le cas d'un vehicule automobile équipé d'un moteur à combustion interne commandé par un papillon des gaz, le changement de la demande de charge est détecté par une modification de la position du papillon des gaz.

3. Procédé selon la revendication 1 ou 2, caractérisé en ce que le couple moteur qui s'établit additionnellement est calculé à partir de changement de la demande de charge.

4. Procédé selon la revendication 1, caractérisé en qu'une accélération maximale admissible est prise en considération en tant que paramètre fixe dans le calcul.

5. Procédé selon l'une quelconque des revendications 1 à 3, caractérisé en ce que le couple moteur et le rapport de transmission de la boîte de vitesses sont pris en considération dans le calcul de l'effet à présumer sur la vitesse angulaire.

6. Procédé selon la revendication 5, caractérisé en ce que la résistance à la marche est prise en considération.

7. Procédé selon l'une quelconque des revendications 1 à 6, caractérisé en ce que la pente de la route est détectée par un détecteur et prise en considération.

8. Procédé selon l'une quelconque des revendications 1 à 6, caractérisé en ce que la pente de la route est déterminée par un diagramme de résistance à la marche et par la détection d'autres paramètres de fonctionnement du vehicule.

9. Procédé selon la revendication 8, caractérisé en ce que le couple moteur et le rapport de transmission de la boîte de vitesses à vitesse constante font partie des autres paramètres de fonctionnement.

10. Procédé selon l'une quelconque des revendications 1 à 9, caractérisé en ce que la vitesse finale à présumer est calculée et un dépassement de la vitesse finale est interprété comme un patinage.

11. Procédé selon l'une quelconque des revendications 1 à 9, caractérisé en ce que l'accélération angulaire des roues est calculée et mesurée, et un dépassement de la valeur calculée est interprétée comme un patinage.

12. Procédé selon l'une quelconque des revendications 1 à 11, caractérisé en ce que lors de l'émission du signal de détection de patinage, il est déterminé, à partir des effets calculés et mesurés du couple moteur additionnel, un couple en excès qui est supprimé graduellement par fermeture du papillon des gaz dans une mesure angulaire correspondante.

13. Procédé selon l'une quelconque des revendications 1 à 11, caractérisé en ce qu'à partir du résultat de la comparaison entre les effets mesurés et calculés sur la vitesse angulaire, il est produit, lors de l'émission d'un signal de patinage, un freinage de la roue de véhicule.

14. Procédé selon la revendication 13, caractérisé en ce que le signal de réglage pour le freinage du véhicule est produit pendant le démarrage et le régime de marche a faible vitesse.

15. Procédé selon la revendication 14, caractérisé en que la régime de marche à faible vitesse se termine à 10 m/s environ.

16. Procédé selon la revendication 12 et 14, caractérisé en ce qu'au-dessus du régime de marche à faible vitesse, le papillon des gaz est remis à la position initiale lors d'un signal de détection de patinage, et en ce qu'au-dessous de régime de marche à faible vitesse, le véhicule est freine lors d'un signal de patinage.

17. Système de régulation de patinage pour l'exécution du procédé selon l'une quelconque des revendications 1 à 16, caractérisé par

a) un détecteur de vitesse de rotation (18—21) associé à l'une au moins des roues motrices (1—4),

b) un détecteur (7) pour détecter la demande de charge,

c) un dispositif électronique (25) pour déterminer par le calcul l'effet de la demande de charge sur la vitesse angulaire de la roue (4) de véhicule en faisant intervenir l'une ou plusieurs des grandeurs suivantes: diagramme caractéristique de couple moteur, rapport de transmission de la boîte de vitesses, diagramme de résistance à la marche, poids du véhicules,

d) un étage comparateur (26) pour comparer les signaux des détecteurs (S1—S4) avec les signaux de vitesse (GE, G) et pour délivrer un signal de réglage (R) en fonction de la comparaison.

18. Système de régulation de patinage selon la revendication 17, caractérisé par un régulateur de pression de freinage (14—17) pour chaque roue (1—4) du véhicule, afin de régler la pression de freinage des roues en fonction d'un signal de réglage (B1—B4).

19. Système de régulation de patinage selon la revendication 17, caractérisé par un organe de réglage (8) pour le réglage du papillon des gaz (6) en fonction du signal de positionnement du papillon des gaz ($E_{dk}$).

20. Système de régulation de patinage selon la revendication 18 et 19, caractérisé par un étage de commande (27) qui délivre les signaux de réglage (B1—B4) et/ou un signal de positionnement du papillon des gaz ($E_{dk}$) en fonction de la vitesse du véhicule.

## Claims

1. Method for slip detection by monitoring the angular velocity of at least one of the driven wheels of a motor vehicle, characterized in that

a) a change in the load demand is detected,

b) the expected effect on the angular velocity of the driven wheel is calculated from the change in load demand while taking a plurality of peripheral conditions into account,

c) the result of the calculated effect is compared with the actual effect, and

d) where there is undue discrepancy between the actual and the calculated result a slip detection signal is output.

2. Method according to Claim 1, characterized in that the change in load demand in a motor vehicle with an internal combustion engine controlled by a throttle flap is detected by the change of the throttle flap setting.

3. Method according to Claims 1 or 2, characterized in that the additional motor torque arising is calculated from the change in load demand.

4. Method according to Claim 1, characterized in that a maximum permissible acceleration is taken into account in the calculation as a fixed parameter.

5. Method according to one of Claims 1 to 3, characterized in that the motor torque and the gear transmission are taken into account in the calculation of the expected effect on the angular velocity.

6. Method according to Claim 5, characterized in that the running resistance is taken into account.

7. Method according to one of Claims 1 to 6, characterized in that the gradient of the road is detected by a sensor and taken into account.

8. Method according to one of Claims 1 to 6, characterized in that the gradient of the road is determined by a running resistance diagram and the detection of other operating parameters of the vehicle.

9. Method according to Claim 8, characterized in that the motor torque and the gear transmission at constant velocity rank among the other operating parameters.

10. Method according to one of Claims 1 to 9, characterized in that the expected final velocity is calculated and if the final velocity is exceeded this is interpreted as slip.

11. Method according to one of Claims 1 to 9, characterized in that the angular acceleration of the wheels is calculated and measured and if the calculated value is exceeded this is interpreted as slip.

12. Method according to one of the preceding Claims, characterized in that when the slip detection signal is output from the calculated and measured effects of the additional torque on the vehicle wheels an excess moment is determined which is reduced by closing the throttle flap by a corresponding angular amount.

13. Method according to one of Claims 1 to 11, characterized in that the vehicle wheel is braked on output of a slip signal from the result of the comparison between the measured and calculated effects on the angular velocity.

14. Method according to Claim 3, characterized in that the actuating signal for braking the vehicle is generated during the start and in the slow-running region.

15. Method according to Claim 14, characterized in that the slow-running region ends at about 10 m/sec.

16. Method according to Claims 12 and 14, characterized in that above the slow-running region the throttle flap is reset on a slip detection signal and below the slow-running region the vehicle wheel is braked on a slip signal.

17. Slip control system for carrying out the method according to one of Claims 1 to 16, characterized by

a) a revolution sensor (18—21) associated with at least one of the driven wheels (1—4),

b) a sensor (7) for detecting the load demand,

c) an electronic device (25) for determination by calculation of the effect of the load demand on the angular velocity of the vehicle wheel (4) taking into account one or more of the following variables: motor torque performance characteristics, gear transmission, running resistance diagram, weight of the vehicle,

d) a comparison step (26) for comparing the sensor signal (S1—S4) with the velocity signals (GE, G) and for supplying a control signal (R) as a function of the comparison.

18. Slip control system according to Claim 17, characterized by a brake pressure actuator (14—17) for each vehicle wheel (1—4) for adjusting the wheel brake pressure as a function of an actuating signal (B1—B4).

19. Slip control system according to Claim 17, characterized by an actuating element (8) for adjusting the throttle flap (6) as a function of the throttle flap adjusting signal ($E_{dk}$).

20. Slip control system according to Claims 18 and 19, characterized by a control step (27) which outputs the actuating signal (B1—B4) and/or a throttle flap adjusting signal ($E_{dk}$) as a function of the vehicle velocity.

Fig. 1

Fig. 2

Fig. 3

Fig. 4

Fig. 5

Fig. 6